# EUROPÄISCHE PATENTSCHRIFT

(11) **EP 0 881 990 B1**
(45) Veröffentlichungstag und Bekanntmachung des Hinweises auf die Patenterteilung: **24.11.1999**
(21) Anmeldenummer: 97901618.5
(22) Anmeldetag: 30.01.1997
(51) Int. Cl.: C02F 3/30

(54) **VERFAHREN ZUR AEROBEN, WEITERGEHENDEN BIOLOGISCHEN REINIGUNG VON ABWÄSSERN**
PROCESS FOR THE THOROUGHGOING AEROBIC BIOLOGICAL PURIFICATION OF WASTE WATER
PROCEDE DE PURIFICATION AEROBIE D'EAUX USEES

(30) Priorität: 02.02.1996 DE 19603690
(43) Veröffentlichungstag der Anmeldung: 09.12.1998
(73) Patentinhaber: Stähler, Theo, 65589 Hadamar 2 (DE)
(72) Erfinder: Stähler, Theo, 65589 Hadamar 2 (DE)
(74) Vertreter: Quermann, Helmut, Dipl.-Ing.
(86) Internationale Anmeldenummer: EP9700411
(87) Internationale Veröffentlichungsnummer: WO9728094

(56) Entgegenhaltungen:
- EP-A- 0 444 585
- DE-A- 3 808 834
- US-A- 3 498 459

## Beschreibung

Die Erfindung bezieht sich auf das Gebiet der biologischen Reinigung von Abwässern nach einem kombinierten Tauchtropfkörper-Belebungsverfahren. Insbesondere betrifft die Erfindung ein Verfahren zur simultanen und integrierten Nitri- und Denitrifikation sowie zur weitestgehenden P-Elimination gemäß Oberbegriff des Anspruchs 1.

Die Eliminierung von N- und P-Verbindungen in der Kläranlage kann beim Stickstoff auf biologischem Wege (Nitrifikation - Denitrifikation) erfolgen. Phosphate werden in der Regel durch chemische Methoden (Fällung, Flockung mit Eisen-, Aluminium-, Calcium-Verbindungen) eliminiert. Biologische Verfahren dazu wurden erst in den letzten Jahren entwickelt. Sie beruhen auf einer erhöhten Inkorporation des Phosphats in den Belebtschlamm-Organismen, welche über die übliche P-Aufnahme durch einen Mikroorganismus hinausgeht. Vgl. hierzu: ATV (1989): Biologische Phosphorentfernung, Korrespondenz Abwasser 36, 337-348 (1989) und Kunst, S.: "Untersuchungen zur Biologischen Phosphorelimination im Hinblick auf ihre abwassertechnische Nutzung", Veröffentlichung des Instituts für Siedlungswasserwirtschaft, Univ. Hannover Heft 77 (1990).

Diese Verfahren zur P- und N-Entfernung werden auch als "weitergehende Reinigung" bzw. als " 3. Reinigungsstufe" bezeichnet.

Festkörperreaktoren, die als Tauchtropfkörper einem Belebungsbecken vor- und/oder nachgeschaltet sind kennt man z.B. aus der DE-A 29 14 689 oder der DE-A 31 40 372. Zu diesen Festkörperreaktoren gehören - wie bereits genannt - die sogenannten Tauchtropfkörper, aber auch lutfmitnehmende Zellradreaktoren, die um eine horizontale Achse rotieren und die in den Zellen z.B. eine Vielzahl von mit Abstand voneinander angeordneten Platten aus beispielsweise Kunststoff oder ähnlichen Feststoffen aufweisen. Aufbau und Funktion von Zellradreaktoren sind u.a. den genannten Schriften entnehmbar.

Ein um eine horizontale Achse rotierender, luftmitnehmender Zellradreaktor (Zellrad), kann zum einen die Funktion eines in der Abwassertechnik als Festbettreaktor eingesetzten Tropfkörpers erfüllen. So können sich im Biorasen Nitrifikanten zur Oxidation von Stickstoff-Verbindungen ansiedeln, womit die Nitrifikation erreicht werden kann.

Zum anderen ist es möglich, mit dem Zellradreaktor die erwünschte Durchmischung im Becken einzustellen, so daß auf ein Misch- oder Rühraggregat verzichtet werden kann.

Nach bislang vorliegenden Informationen ist es noch nicht gelungen, eine verstärkte, mithin weitgehende biologische P-Elimination in eine simultane Nitrifikation und Denitrifikation so zu integrieren, daß nur ein einziges Becken benötigt wird, daß also eine erhöhte biologische P-Elimination sowie Nitrifikation und Denitrifikation gleichzeitig (simultan) und in einem Becken (integriert) ablaufen.

Dies gelingt jedoch bei einer Verfahrensweise zur weitergehenden biologischen Reinigung von Abwässern, bei welcher gegebenenfalls mechanisch vorbehandeltes Abwasser einem sowohl sessile als auch suspendierte Biomasse aufweisendem Biobecken zugeführt wird und worin Stickstoff- und Phosphorverbindungen weitgehend biologisch entfernt werden, und bei welcher derart behandeltes, gereinigtes Abwasser dem Biobecken wieder entnehmbar ist, mit den Merkmalen des kennzeichnenden Teils des Anspruchs 1.

Vorteilhafte Verfahrensabwandlungen werden in den auf den unabhängigen Anspruch rückbezogenen Ansprüchen unter Schutz gestellt.

Dadurch, daß bei einem Verfahren der eingangs erwähnten Gattung während des Betriebs im Biobecken durch regelbaren Sauerstoffeintrag Bereiche mit unterschiedlichem Sauerstoffmillieu aufrechterhalten werden, wobei der Oberfläche des Biobeckens benachbart ein aerober Bereich und dem Grund des Biobeckens benachbart ein anoxischer Bereich ausgebildet wird, die gegebenenfalls durch einen oder mehrere Übergangsbereiche miteinander verbunden sind, und daß eine Biomassekonzentration als Summme von sessiler und suspendierter Biomasse von mehr als 3 kg Trockensubstanz pro m³ im genutzten Volumen des Biobeckens eingesetzt wird, gelingt es auf nicht ohne weiteres vorhersebare Weise, eine echte simultane und integrierte Nitrifikation, Denitrifikation und erhöhte biologische P-Elimination eines zu reinigenden Abwassers sicher zu stellen. Dabei gelingt es insbesondere durch die Kombination und das synergistische Zusammenwirken zweier Maßnahmen wie der Aufrechterhaltung bestimmter Sauerstoffmillieus in verschiedenen Bereichen oder Höhenzonen des Biobeckens und einer Fahrweise mit wesentlich höheren Biomassekonzentrationen als in konventionellen Belebtschlammanlagen, mehr Leistung, einen wirtschaftlicheren Betrieb und niedrigere Unterhaltskosten als bei bislang bekannten Verfahren zu gewährleisten.

Beim erfindungsgemäßen Verfahren kommt es in einem Biobecken oder Belebungsbecken zur Ausbildung von Bereichen oder Zonen, in denen ein unterschiedliches Sauerstoffmilieu herrscht. Dabei beinflussen die Sauerstoffmilieubedingungen den in den jeweiligen Bereichen oder Zonen statttfindenden Eliminationsprozeß. Während aller Sauerstoffmilieubedingungen werden im Biobecken oder Belebungsbecken organische Kohlenstoffverbindungen abgebaut. Spezifisch beeinflußt werden insbesondere bei Einhaltung bestimmter Belastungsbereiche die weitergehenden Abwasserreinigungsprozesse der Nitrifikation, Denitrifikation und biologischen P-Elimination.

Hierbei kommt es im aeroben Milieu des aeroben Bereichs respektive der aeroben Zone, welche der Oberfläche des Biobeckens oder Belebtschlammbeckens benachbart ist, bevorzugt zur Nitrifikation. Das aerobe Milieu der Zone bzw. des Bereichs ist dabei gekennzeichnet durch das Vorhandensein von gelöstem Sauerstoff und gegebenenfalls von chemisch gebundenem Sauerstoff, z.B. in Form von Nitrat, wie es nach Nitrifikation von beispielsweise der Ammoniumverbindungen vorliegen kann.

Im Gegensatz hierzu läuft im anoxischen Milieu, welches den anoxischen Bereich bzw. die anoxische Zone auszeichnet, die am unteren Bereich des Biobeckens oder Belebtschlammbeckens ausgebildet ist, bevorzugt die Denitrifikation ab. Das anoxische Milieu, respektive der Bereich oder die Zone, in welcher das anoxische Milieu vorherrscht, ist dabei durch ein weitgehendes oder gänzliches Fehlen von gelöstem Sauerstoff und das Vorliegen von chemisch gebundenem Sauerstoff gekennzeichnet.

Gemäß der Erfindung sind der aerobe Bereich und der anoxische Bereich gegebenenfalls durch einen oder mehrere Übergangsbereiche miteinander verbunden. Der Übergang kann dabei diskontinuierlich, bevorzugt aber kontinuierlich stattfinden. Im Rahmen der Erfindung herrschen in dem einen oder mehreren Übergangsbereichen regelmäßig Sauerstoffmilieubedingungen, welche einer Konzentration an gelöstem Sauerstoff von > 0,5 mg/l entsprechen. Dieses Milieu trägt u.a. vorzugsweise zu einer erhöhten biologischen P-Elimination bei.

Dabei kann im Bereich des Bodens des Biobeckens ein anaerobes Milieu ausgebildet sein, welches sich durch ein weitgehendes bzw. gänzliches Fehlen von gelöstem und von chemisch gebundenen Sauerstoff (nach der Denitrifikation) auszeichnet. Auch dieser Bereich trägt zur Denitrifikation und P-Eliminierung bei.

Dabei war es wie bereits angedeutet für die Erfindung äußerst überraschend, daß es entgegen des bis zur Erfindung gültigen Kenntnisstandes gelang, die wechselnden Sauerstoffmilieubedingungen in einem Biobecken so einzustellen und zu regeln, daß innerhalb eines einzigen Beckens und mit einem einzigen Verfahren eine Stressituation für Mikroorganismen erzeugt wird, die zu einer weitgehenden kombinierten Denitrifikation und biologischen P-Elimination führt.

Bislang ist man im Hinblick auf die biologische P-Elimination davon ausgegangen, daß für eine biologische P-Elimination eine chemische Behandlung oder auch ein separates Becken mit einem anaeroben Milieu erforderlich ist. Durch die Erfindung jedoch gelingt es, diesen Prozess in einem einzigen Becken in einem einzigen Verfahren auszuführen. Dabei werden auch die im Kreislauf geführten Wassermengen drastisch reduziert, die bei herkömmlichen Verfahren meist ein Vielfaches des Abwasserstromes darstellten, welcher in der Anlage zu behandeln war.

Nachdem verfahrensgemäß der Stand der Technik zwar gelegentlich auch eine simultane und integrierte Nitri- und Denitrifikation mit P-Elimination benennt, sind die vorbekannten Prozesse doch verglichen mit dem erfindungsgemäßen Verfahren nur als quasi simultan zu bezeichnen. Die unterschiedlichen Sauerstoffmilieubedingungen welche zur Ermöglichung der Nitri- und Denitrifikation mit P-Elimination benötigt werden, werden zwar nach dem Stand der Technik gegebenenfalls auch in einem Becken erzeugt, jedoch entweder zu unterschiedlichen Zeiten oder in unterschiedlichen getrennten Räumen eines Beckens. Dagegen gelingt es mit der Erfindung Bereiche auszubilden, zwischen denen der Übergang im Hinblick auf die Sauerstoffmilieubedingungen fließend ist. Ein solcher kontinuierlicher Übergang ist bislang nicht verwirklicht worden, wobei die Erfindung dies auf erstaunlich einfache und sichere Weise ermöglicht.

Gegenüber der zeitlichen Trennung der verschiedenen Sauerstoffmilieubedingungen, bei welcher beispielsweise zunächst belüftet wird, um eine weitgehende Nitrifikation zu erreichen, worauf eine Zeit der Nichtbelüftung folgt, in der das Milieu zum anaeroben überwechselt (auf Denitrifikation), wozu in der Regel ein zusätzliches Misch- oder Rühraggregat erforderlich ist, wobei die Denitrifikation von einem anaeroben Milieu bei Aufrechterhaltung der Zeit der Nichtbelüftung gefolgt wird, weist das Verfahren der Erfindung den Vorteil auf, daß für die einzelnen Abbauprozesse zu jedem Zeitpunkt die optimalen Milieubedingungen eingehalten werden. Somit leidet keiner der integriert und simultan ausgeführten Abbauprozesse.

Gegenüber der räumlichen Trennung der verschiedenen Sauerstoffmilieubedingungen, bei welcher die Prozesse in verschiedenen getrennten Beckeneinheiten ablaufen, ist das Verfahren der Erfindung prozeßstabil, besonders einfach und wenig arbeitsintensiv durchführbar. Insbesondere werden keine zusätzlichen Aggregate und chemischen Zusätze benötigt.

Nachdem die integrierte und simultane Verfahrensweise gemäß der Erfindung eine Biomassekonzentration als Summe von sessiler und suspendierter Biomasse von mehr als 3 kg Trockensubstanz pro m³ genutztem Biobeckenvolumen zuläßt, ist es in besonders vorteiliger Variation des erfindungsgemäßen Verfahrens möglich, eine Biomassekonzentration im Bereich von 4 bis 8 kg pro m³ einzusetzen. Eine solche Biomassekonzentration kann als deutlich erhöht gegenüber bekannten Verfahren bezeichnet werden. Auch 10kg pro m³ sind erfindungsgemäß möglich. Besonders günstig sind 5-7 kg pro m³.

Ein Kennzeichen der Erfindung ist es, daß die für die einzelnen Prozesse erforderlichen Sauerstoffmilieubedingungen zeitgleich in einem einzigen Becken erzeugt werden. Dabei ist es in besonderer Verfahrensmodifikation äußerst zweckmäßig, daß im aeroben Bereich eine Konzentration an gelöstem freiem Sauerstoff im Bereich von etwa 1 bis 4 mg pro Liter aufrechterhalten wird. Bevorzugt sind 1 bis 3 mg/l.

Eine weitere bevorzugte Ausführungsform des erfindungsgemäßen Verfahrens sieht vor, daß im anoxischen Bereich eine Konzentration an gelöstem freiem Sauerstoff im Bereich von < 0,5 mg/l oder weniger aufrechterhalten wird. Vorteilig wird das Verfahren der Erfindung dabei so abgewandelt, daß gleichzeitig der Anteil von Sauerstoff, der in chemisch gebundener Form vorliegt, gegen Null geht.

Für das Verständnis der Erfindung ist dabei wichtig zu berücksichtigen, daß zur Erfindung gehörig insbesondere auch solche Prozesse gelten, bei denen während des Betriebs im Biobecken durch regelbaren Sauerstoffeintrag Bereiche mit unterschiedlichem Sauerstoffmilieu aufrechterhalten werden. wobei der Oberfläche des Biobeckens benachbart ein aerober Bereich und im Bodenbereich des Biobeckens ein anoxischer bis anaerober Bereich ausgebildet werden. D.h. nicht nur die Abstufung der Sauerstoffmilieubedingungen aerob, anoxisch und anaerob sondern auch die Ausbildung von Sauerstoffmilieubedingungen aerob und anoxisch, wobei die Übergänge zwischen den Sauerstoffmilieubedingungen fließend und bevorzugt kontinuierlich sind, erlauben die Erzielung der mit der Erfindung verbundenen Vorteile.

Die verschiedenen Zonen oder Bereiche gemäß der Erfindung sind dabei räumlich nicht voneinander getrennt sondern werden bevorzugt in verschiedenen Tiefen, d.h. Niveaus des Biobeckens verwirklicht. In zweckmäßiger Ausgestaltung des erfindungsgemäßen Verfahrens wird das Biobecken dabei so betrieben, daß 1/2 bis 3/4, vorzugsweise 2/3 bis 3/4, des Volumens des Biobeckens als aerober Bereich gefahren werden.

Weiterhin ist es von besonderem Vorteil bei der Durchführung des erfindungsgemäßen Verfahrens, wenn 1/4 bis 1/2, vorzugsweise 1/4 bis 1/3. des genutzten Biobeckenvolumens als anoxischer Bereich gefahren werden.

Bezüglich der gegebenenfalls vorhandenen einen oder mehreren Übergangszonen bleibt festzuhalten, daß es sich hierbei um eine Zone handelt, in welcher der Sauerstoffgehalt von der anoxischen Zone (Boden des Biobeckens) in Richtung zur aeroben Zone (Oberfläche des Biobeckens) hin ansteigt. Besonders zweckmäßig ist ein Verfahren gemäß der Erfindung dann, wenn in der Übergangszone eine vom anoxischen Bereich zum aeroben Bereich hin ansteigende Sauerstoffkonzentration mit einem Gehalt an gelöstem freiem Sauerstoff, der > 0,5 und < 1 mg/l ist, aufrechterhalten wird.

Eine weitere günstige Verfahrensweise ergibt sich dadurch, daß in einer Übergangszone vom anoxischen Bereich zum aeroben Bereich hin ansteigende Sauerstoffkonzentrationen mit einem Gehalt an gelöstem freiem Sauerstoff, der im Bereich von 0 bis 0,5 mg/l liegt, aufrechterhalten werden.

Zur Durchführung des erfindungsgemäßen Verfahrens ist es weiters von besonderer Bedeutung, daß die Aufrechterhaltung der Bereiche mit unterschiedlichem Sauerstoffmilieu durch regelbaren Sauerstoffeintrag geschieht. Zu diesem Zweck ist es besonders vorteilig, daß der Sauerstoffgehalt im anoxischen Bereich zur Ermittlung eines Ist-Wertes in bestimmten Zeitintervallen und/oder kontinuierlich gemessen wird. Andererseits ist es noch günstiger, wenn das Verfahren der Erfindung so ausgeführt wird, daß der Sauerstoffgehalt im aeroben Bereich zur Ermittlung eines Ist-Wertes in Intervallen oder kontinuierlich gemessen wird. Dies kann beispielsweise mit einer dem Fachmann geläufigen üblichen Sauerstoffsonde geschehen.

In Abhängigkeit von den gemessenen Ist-Werten, die entweder wie bereits erwähnt kontinuierlich oder auch in bestimmten Zeitabständen bestimmt werden, ist dann der jeweilige Ist-Wert durch geregelten Sauerstoffeintrag an vorgegebene Soll-Werte anzugleichen. Die besonders bevorzugten Soll-Werte für den Sauerstoffgehalt der jeweiligen Zone ergeben sich aus den hierin oben genannten Daten. Im Rahmen der Erfindung ist die Nachführung des Sauerstoffgehaltes an vorgegebene Soll-Werte grundsätzlich auf viele dem Fachmann geläufige Weisen zu erreichen. In besonderer Ausgestaltung des erfindungsgemäßen Verfahrens ist es jedoch besonders einfach, kostengünstig, effizient und deshalb auch bei weitem bevorzugt, daß der Sauerstoffeintrag mittels eines sogenannten Zellrades, durchgeführt wird. Einzelheiten zu im Rahmen der Erfindung sehr zweckmäßig einzusetzenden Zellrädern entnimmt man u.a. der DE-A 29 14 689, der DE-A 31 40 372 oder der DE-A 34 11 865.(CN 10 467). Hierbei läßt sich insbesondere günstigerweise durch die Steuerung der Umdrehungszahl des Zellrades in Abhängigkeit von den gemessenen Ist-Werten die Sauerstoffkonzentration der zur Erreichung des gewünschten Sauerstoff Soll-Wertes erforderliche Sauerstoffeintrag verwirklichen. Dabei ist es weiters von besonderem Vorteil wenn der Ist-Wert des Sauerstoffgehaltes außerhalb des Zellrades im Biobecken gemessen wird.

Die für die einzelnen Prozesse erforderlichen Milieubedingungen werden durch ein Verfahren der Erfindung zeitgleich in einem einzigen Becken erzeugt. Insgesamt gesehen, sind unter Verwendung von Zellrädern - was aus den obigen Erläuterungen folgt - zwei Verfahrensvarianten besonders hervorzuheben. In einer ersten Variante wird das Verfahren der Erfindung mit den Sauerstoffmilieubedingungen aerob und anoxisch durchgeführt. Hierzu wird an der Oberfläche des Biobeckens benachbart und innerhalb des Zellrades ein aerober Bereich ausgebildet, der unabhängig von der Drehzahl des Zellrades immer vorhanden ist und in dem eine gleichbleibend hohe Nitrifikationsleistung sichergestellt wird. Zum Grund des Biobeckens und zum Teil neben dem Zellrad wird ein anoxisches Milieu eingehalten, welches zur weitgehenden Denitrifikation dient. Der Sauerstoffgehalt kann dabei über eine Steuerung bzw. Regelung so eingestellt werden, daß das anoxische Milieu bis zum anaeroben Milieu führen kann.

In einer zweiten Variante wird das Verfahren der Erfindung mit den Sauerstoffmilieubedingungen aerob, anoxisch und anaerob durchgeführt. Grundsätzlich erfolgt der Betrieb dabei wie unter der ersten genannten Verfahrensvariante, jedoch wird durch eine Aufweitung des Raumes neben und unter dem Zellrad ein zusätzlicher Bereich geschaffen, in dem das anoxische Milieu teilweise in ein anaerobes Milieu übergehen kann.

Insgesamt gesehen kennzeichnen sich jedoch alle erfindungsgemäßen Betriebsweisen dadurch, daß die im Biobecken vorhandenen Mikroorganismen einem ständigen Wechsel der Milieubedingungen unterworfen werden. Dieser Wechsel erfolgt insbesondere in wesentlichen kürzeren Zeitabständen (beispielsweise minütlich) als bei herkömmlichen Verfahren, in denen dieser Wechsel in separaten Beckeneinheiten zum Teil erst nach Stunden erfolgt. Dabei sind in der besonders vorteiligen Variante unter Verwendung eines Zellrades keine weiteren Aggregate erforderlich, da das Zellrad neben dem Sauerstoffeintrag auch die homogene Durchmischung erzeugt.

Wie bereits ausgeführt, gelingt es insbesondere in diesem Zusammenhang durch das synergistische Zusammenwirken zweier Maßnahmen (Aufrechterhaltung bestimmter Sauerstoffmilieus und Fahrweise mit wesentlich höheren Biomassekonzentrationen) mehr Leistung bei erhöhter Prozesstabilität, einen wirtschaftlicheren Betrieb und niedrigere Unterhaltskosten als bei bislang bekannten Verfahren zu gewährleisten.

insgesamt wird eine Leistungssteigerung, insbesondere durch die Nutzung der spezifischen Abbauleistungen des sessilen und des suspendierten Belebtschlammes in einer kombinierten Einheit, eine stabilere Reinigungsleistung bei hoher hydraulischer Belastung durch den vermehrten Biomasseanteil, gute Schlammeigenschaften, niedrigere Schlammindizes und eine bis zu 50% höhere Belebtschlammkonzentration durch den Anteil an suspendierten Mikroorganismen bei niedrigerem Schlammalter erreicht. Die verbesserte Wirtschaftlichkeit des erfindungsgemäßen Verfahrens ebenso wie dessen enorm niedrige Unterhaltskosten beruhen unter anderem auf einem hohen möglichen Sauerstoffeintrag, einer erhöhten Betriebssicherheit sowie hoher Prozessstabilität auf der einen Seite und allgemein auf der Einfachheit der gegebenenfalls einzusetzenden Aggregate, insbesondere der Zellräder.

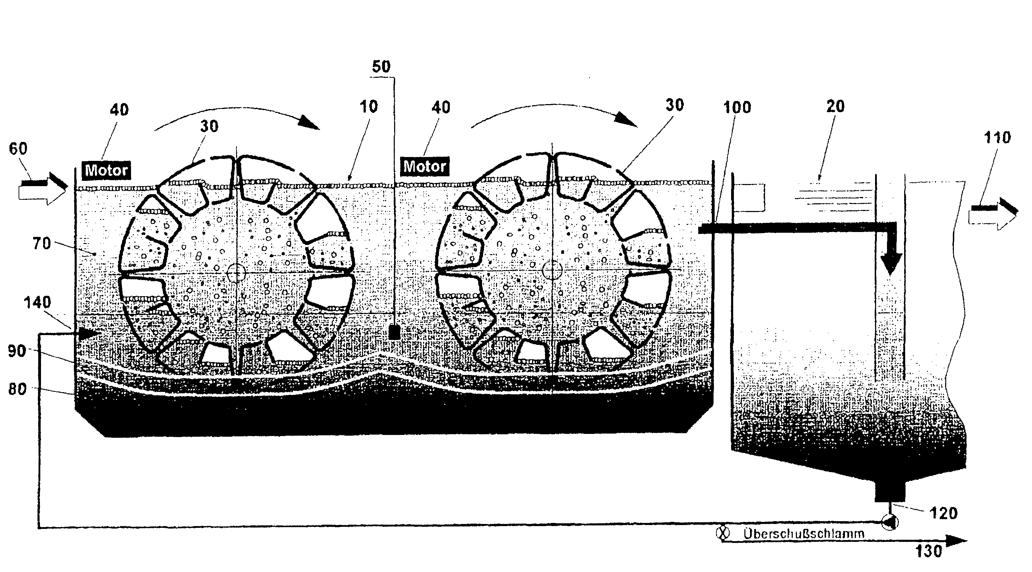

Nachfolgend wird die Erfindung unter Bezugnahme auf die beigefügte Figur anhand eines Ausführungsbeispieles eigehender erläutert.

In der Figur ist ein Schnitt durch ein Biobecken enthaltend zwei Zellräder sowie eine dem Biobecken nachgeschaltete Nachklärung dargestellt.

Das erfindungsgemäß zu betreibende Biobecken 10 weist im dargestellten Beispiel zwei Zellräder 30 auf, welche um eine zentrale Achse drehbar im Biobecken angeordnet sind. Die Zellräder sind durch nicht näher dargestellte motorische Antriebe 40 in Rotation um ihre zentrale Achse versetzbar. Ein Sonde 50 taucht in das Biobecken ein und dient zur Messung des O₂-Gehaltes im Biobecken. In Abhängigkeit vom gemessenen O₂-Gehalt steuert die Sonde über den motorischen Antrieb die Drehzahl der Tauchkörper, welche im dargestellten Beispiel die Zellräder 30 sind. Über den Zulauf 60 wird das Biobecken mit zu behandelndem Abwasser versorgt. Innerhalb des Biobeckens wird zunächst ein der Oberfläche des Beckens benachbarter Bereich 70 ausgebildet, welcher auch als aerober Bereich bezeichnet wird. Innerhalb dieses Bereiches beträgt die Sauerstoffkonzentration im allgemeinen mehr als etwa 1,0 mg/l. Dem Boden des Biobeckens benachbart wird ein weiterer Bereich 80 ausgebildet. Es handelt sich hierbei um einen anoxischen Bereich, in welchem die Sauerstoffkonzentrationen im allgemeinen < 0,5 mg/l ist. Zwischen dem aeroben Bereich 70 und dem anoxischen Bereich 80 wird im dargestellten Beispiel ein Übergangsbereich 90 ausgebildet, in welchem die Sauerstoffkonzentration zwischen 0,5 und etwa 1,0 mg/l liegt. Die Ausdehnung dieses Übergangsbereichs wird durch den Verlauf der beiden hell eingetragenen Linien verdeutlicht. Das Biobecken 10 verfügt desweiteren über einen Ablauf 100, welcher behandeltes Wasser einer Nachklärung 20 zuführt. Die Nachklärung 20 weist einen Ablauf 120 auf, der zur Rückführung der Biomasse aus der Nachklärung in das Biobecken über den Zufluß 140 mit dem Biobecken 10 in Verbindung steht. Über einen Ablauf 130 kann überschüssiger Schlamm aus dem Rücklauf zwischen Nachklärung und Biobecken entfernt werden. Behandeltes geklärtes Wasser kann dem Nachklärungsbecken über den Ablauf 110 entzogen werden.

Die im Verfahren der Erfindung bevorzugten einsetzbaren Zellräder sind dabei an sich bekannt und vielfältig abwandelbar, beispielsweise durch ein sogenanntes Röhrenrad. Gemeinsam ist den Rädern, daß sie eine Kombination des Tauchkörper- und des Belebungsverfahrens ermöglichen. Als Tauchkörper werden dabei wie eingangs bereits erwähnt ortsfest unter Wasser eingebaute rotierende periodisch teilweise oder gänzlich auftauchende Aufwuchsflächen verstanden. Die Abwasserreinigung erfordert dabei zum einen durch den freischwebenden Belebtschlamm suspendierte Biomasse im Biobecken 10 zum anderen durch festhaftende Mikroorganismen auf den rotierenden Tauchkörperbewuchsflächen (sogenannte sessile Biomasse). Dadurch wird die Wirkung des Belebtschlammverfahrens mit der des Tauchkörperverfahrens in einer Verfahrenseinheit vereinigt. Insbesondere erfolgt die Sauerstoffversorgung aller Mikroorganismen durch langsames Drehen des Tauchkörpers, wozu ein außenliegender drehzahlgeregelter Motor (Frequenzumformer) dienen kann, welcher das Rad antreibt. Gelangt während dieser Drehbewegung der Tauchkörper über die Wasseroberfläche, so läuft das in den Hohlkörpern enthaltene Abwasser Belebtschlammgemisch aus. Statt dessen füllt sich der Tauchkörper mit Umgebungsluft. Der zur Oxidation der Abwasserinhaltsstoffe notwendige Sauerstoff löst sich dabei an den feuchten Oberflächen der bewachsenen Platten. Da diese großen Oberflächen direkt dem vollen Partialdruck der Luft ausgesetzt sind, wird dort unmittelbar Sauerstoffsättigung erreicht. Infolge der Diffusion dringt der Sauerstoff durch das sich aufbauende Konzentrationsgefälle in die tieferen Schichten des Bewuchses vor.

Taucht der Hohlkörper wieder in das Abwasserbelebtschlammgemisch ein, wird die Luft eingeschlossen. Sie wird bis zum Tiefpunkt zwangsgeführt und dabei zunehmend komprimiert. Ein Teil der mitgeführten Luft entweicht im Bereich des Tiefpunktes der Drehbewegung und wird durch die Formgebung der Tauchkörper als mittlere bis feine Blasen zum Rad mitgeleitet. Die Blasen suchen ihren weiteren Weg durch gegenüberliegende Tauchkörper an die Wasseroberfläche und bewirken gemeinsam mit der Drehbewegung des Rades eine gleichmäßige Durchmischung des Biobeckens sowie die optimale Versorgung des suspendierten Belebtschlammes mit Sauerstoff.

Während der aufsteigenden Drehbewegungen wirkt das zum Teil luftgefüllte Segment als Hohlkörper und trägt durch die Auftriebskräfte zur Minderung des Energieaufwandes bei. Vor dem Auftauchen wird die restliche Luft in den Wasserkörper entlassen. Die im Tauchkörper angeordneten Oberflächen werden während des Durchganges in der freien Athmosphäre bis zur Sättigung mit Sauerstoff versorgt. Die zwangsgeführte Luft bestreicht während der Drehbewegungen nochmals alle im Tauchkörper liegenden Oberflächen. Dadurch werden die sessilen Mikroorganismen der Tauchkörperkomponente auch im Wasserkörper optimal mit Sauerstoff versorgt. Die zwangsgeführte Luft streicht an den speziell gewellten Plattenoberflächen vorbei. Die Profilierung ist so gestaltet, daß sich zwangsläufig ständig neue Übergangsphasen im komprimierten Raum für den Sauerstoffaustausch bilden. Hieraus resultiert die besonders günstige zeitgleiche Sauerstoffversorgung der Komponenten Biorasen und Belebtschlamm.

Zur Verdeutlichung der Leistungsfähigkeit des erfindungsgemäßen Verfahrens werden nachfolgend die Meßwerte einer vorzugsweise auf Nitrifikation ausgelegten Modell-Kläranlage wiedergegeben. Die Summe aus sessiler und suspendierter Biomasse betrug im Mittel 5 bis 10 kg/m³. Die Leistungsaufnahme der Biostufe betrug im Tagesmittel 5,6 kW, das Gesamtvolumen der Biostufe betrug 240 m³. Die Raumbelastung lag im Bereich von 0,7 kg BSB5/m³ x Tag.

Die Tiefe des Beckens der Biostufe betrug etwa 4 m. Der Durchmesser des eingesetzten Zellrades war 4,25 m, wobei der Abstand zwischen Beckenboden und tiefstem Punkt des Zellrades etwa 0,25 m betrug. Damit ragte das Zellrad an seiner höchsten Stelle etwa 0,5 m über die Wasseroberfläche des Biobeckens.

Die Sauerstoffkonzentration innerhalb des Biobeckens wurde an 5 Meßstellen außerhalb des Zellrades mit handelsüblichen Sonden gemessen.

Die Meßstelle 1 war in ca. 0,5 m Wassertiefe, also ca. 3,5 m über Grund.

Die Meßstelle 2 war in ca. 1,5 m Wassertiefe, also ca. 2,5 m über Grund.

Die Meßstelle 3 war in ca. 2,5 m Wassertiefe, also ca. 1,5 m über Grund.

Die Meßstelle 4 war in ca. 3,45 m Wassertiefe, also ca. 0,55 m über Grund.

Die Meßstelle 5 war in ca. 3,95 m Wassertiefe, also ca. 0,05 m über Grund.

Ferner wurde die Biomasse als Trockensubstanz bestimmt.

In Abhängigkeit von den gemessenen Sauerstoffkonzentrationen wurde die Umdrehungsgeschwindigkeit des Zellrades im Bereich von etwa 0,3 - 1,0 Upm so geregelt, daß an den Meßstellen 1-5 die in der Tabelle 1 wiedergegebenen Sauerstoffkonzentrationen konstant vorlagen.

Meßwerte jeweils für jeden Monat eines Testjahres:

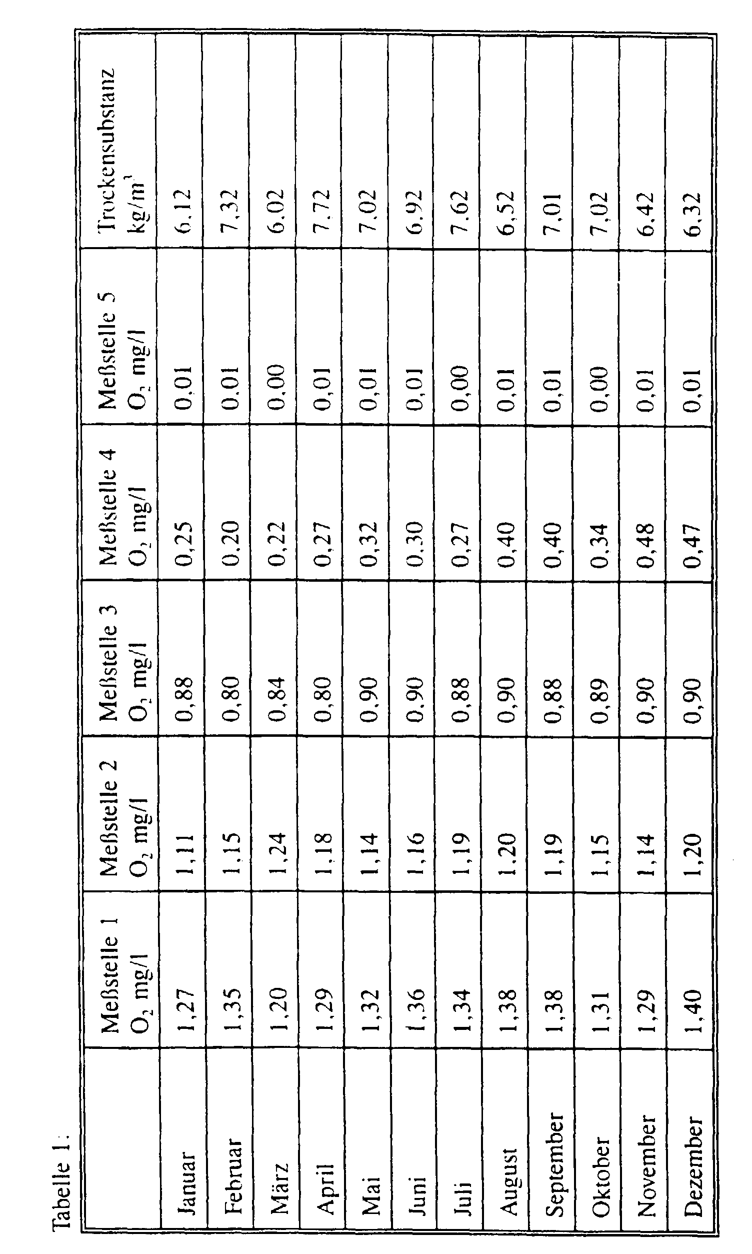

Die Leistung der Anlage ergibt sich aus Tabelle 2.

Gemessen wurden der biologische Sauerstoffbedarf (BSB5), der chemische Sauerstoffbedarf (CSB), der Phosphatgehalt (PO4-P), der Ammoniumgehalt (NO4-N), der NO₂-Gehalt (NO2-N) und der NO₃-Gehalt (NO3-N) jeweils am Zulauf und am Auslauf der Kläranlage. Die Werte wurden insgesamt über ein Jahr ermittelt, wobei die monatlichen Mittelwerte in der Tabelle 2 angegeben sind.

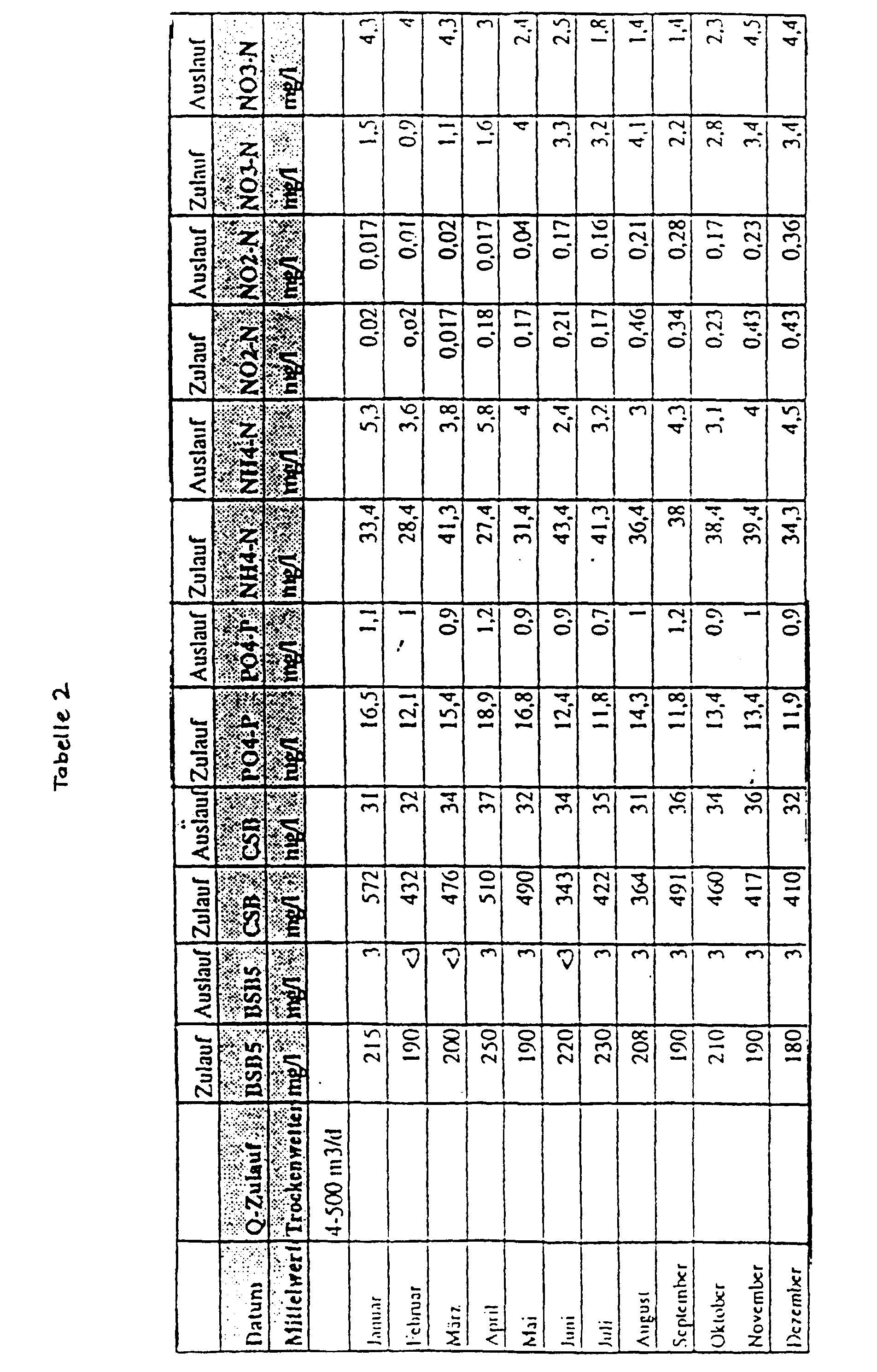

Aufgrund der oben gezeigten Ergebnisse der Tabelle 2 ist ersichtlich, daß mit dem erfindungsgemäßen Verfahren sowohl eine Nitrifikation als auch Denitrifikation zusammen mit einer weitestgehenden P-Elimination in einem einzigen Biobecken in einem einzigen Verfahren erreicht werden können.

## Patentansprüche

1. Verfahren zur weitergehenden biologischen Reinigung von Abwässern, bei dem ggfls. mechanisch vorbehandeltes Abwasser einem sowohl sessile als auch suspendierte Biomasse aufweisenden Biobecken zugeführt wird, worin Stickstoff- und Phosphorverbindungen weitgehend biologisch entfernt werden, und bei dem derart behandeltes gereinigtes Abwasser dem Biobecken wieder entnehmbar ist,
dadurch gekennzeichnet,
daß während des Betriebs im Biobecken durch regelbaren Sauerstoffeintrag Bereiche mit unterschiedlichem Sauerstoff-Milieu aufrechterhalten werden, wobei der Oberfläche des Biobeckens benachbart ein aerober Bereich und dem Grund des Biobeckens benachbart ein anoxischer Bereich ausgebildet wird, die gegebenenfalls durch einen oder mehrere Übergangsbereiche miteinander verbunden sind,
und daß eine Biomasse-Konzentration als Summe von sessiler und suspendierter Biomasse von mehr als 3 kg Trockensubstanz pro m³ genutztem Biobeckenvolumen eingesetzt wird.

2. Verfahren nach Anspruch 1, dadurch gekennzeichnet, daß eine Biomasse-Konzentration im Bereich von 4-8 kg pro m³ eingesetzt wird.

3. Verfahren nach Anspruch 1 oder 2, dadurch gekennzeichnet, daß im aeroben Bereich eine Konzentration an gelöstem freiem Sauerstoff im Bereich von etwa 1 bis 4 mg/l aufrechterhalten wird.

4. Verfahren nach einem oder mehreren der vorhergehenden Ansprüche, dadurch gekennzeichnet, daß im anoxischen Bereich eine Konzentration an gelöstem freiem Sauerstoff im Bereich von weniger als 0,5 mg/l gefahren wird.

5. Verfahren nach Anspruch 4, dadurch gekennzeichnet, daß der Anteil an Sauerstoff, der in Form von chemisch gebundenem Sauerstoff, z.B. als Nitrat, vorliegt, gegen Null geht.

6. Verfahren nach einem oder mehreren der vorhergehenden Ansprüche dadurch gekennzeichnet, daß 1/2 bis 3/4, vorzugsweise 2/3 bis 3/4, des Volumens des Biobeckens als aerober Bereich gefahren werden.

7. Verfahren nach einem oder mehreren der vorhergehenden Ansprüche 1-5, dadurch gekennzeichnet, daß 1/4 bis 1/2, vorzugsweise 1/4 bis 1/3, des genutzten Biobeckenvolumens als anoxischer Bereich gefahren werden.

8. Verfahren nach einem oder mehreren der vorhergehenden Ansprüche, dadurch gekennzeichnet, daß in der Übergangszone eine vom anoxischen Bereich zum aeroben Bereich hin ansteigende Sauerstoffkonzentration mit einem Gehalt an gelöstem freiem Sauerstoff, der > 0,5 mg/l und < 1 mg/l ist, aufrechterhalten wird.

9. Verfahren nach einem oder mehreren der vorhergehenden Ansprüche, dadurch gekennzeichnet, daß der Sauerstoffgehalt im anoxischen Bereich zur Ermittlung eines Ist-Wertes kontinuierlich gemessen wird.

10. Verfahren nach einem oder mehreren der vorhergehenden Ansprüche dadurch gekennzeichnet, daß der Sauerstoffgehalt im aeroben Bereich zur Ermittlung eines Ist-Wertes kontinuierlich gemessen wird.

11. Verfahren nach einem oder beiden der vorhergehenden Ansprüche 9 und 10, dadurch gekennzeichnet, daß die Ist-Werte durch geregelten Sauerstoffeintrag an vorgegebene Soll-Werte angeglichen werden.

12. Verfahren nach einem oder mehreren der vorhergehenden Ansprüche, dadurch gekennzeichnet, daß der Sauerstoffeintrag mittels eines Zellrades durchgeführt wird.

13. Verfahren nach Anspruch 12, dadurch gekennzeichnet, daß die Umdrehungszahl des Zellrades zur Erreichung des gewünschten Sauerstoff Soll-Wertes in Abhängigkeit vom gemessenen Ist-Wert für die Sauerstoffkonzentration geregelt wird.

14. Verfahren nach einem der Ansprüche 12 oder 13, dadurch gekennzeichnet, daß der Ist-Wert des Sauerstoffgehaltes außerhalb des Zellrades im Biobecken gemessen wird.

## Claims

1. Method for more extensive biological purification of waste waters, which involves waste water which may or may not have been mechanically pre-treated being fed to a biological treatment tank which contains both sessile and suspended biomass and in which nitrogen compounds and phosphorus compounds are removed largely biologically, said method allowing purified waste water thus treated to be drawn off again from the biological treatment tank,
characterized in that
during operation in the biological treatment tank zones having different oxygen environments are maintained by controllable introduction of oxygen, an aerobic zone being formed adjacent to the surface of the biological treatment tank and an anoxic zone being formed adjacent to the bottom of the biological treatment tank, said zones optionally being linked to one another, if appropriate, by one or more transition zones,
and in that a biomass concentration as the sum of sessile and suspended biomass of more than 3 kg of dry matter per m³ of useful biological treatment tank volume is employed.

2. Method according to Claim 1, characterized in that a biomass concentration in the range of 4-8 kg per m³ is employed.

3. Method according to Claim 1 or 2, characterized in that a concentration of dissolved free oxygen in the range of from about 1 to 4 mg/l is maintained in the aerobic zone.

4. Method according to one or more of the preceding claims, characterized in that a concentration of dissolved free oxygen in the range of less than 0.5 mg/l is operated in the anoxic zone.

5. Method according to Claim 4, characterized in that the fraction of oxygen present in the form of chemically bound oxygen, e.g. as nitrate, approaches zero.

6. Method according to one or more of the preceding claims, characterized in that from 1/2 to 3/4, preferably from 2/3 to 3/4, of the volume of the biological treatment tank is operated as an aerobic zone.

7. Method according to one or more of the preceding Claims 1-5, characterized in that from 1/4 to 1/2, preferably from 1/4 to 1/3, of the useful biological treatment tank volume is operated as an anoxic zone.

8. Method according to one or more of the preceding claims, characterized in that the oxygen concentration maintained in the transition zone increases from the anoxic zone to the aerobic zone and amounts to a level of dissolved free oxygen which is greater than 0.5 mg/l and less than 1 mg/l.

9. Method according to one or more of the preceding claims, characterized in that the oxygen level in the anoxic zone is measured continuously in order to determine an actual value.

10. Method according to one or more of the preceding claims, characterized in that the oxygen level in the aerobic zone is measured continuously in order to determine an actual value.

11. Method according to one or both of the preceding Claims 9 and 10, characterized in that the actual values are adjusted to predefined set points by controlled introduction of oxygen.

12. Method according to one or more of the preceding claims, characterized in that the introduction of oxygen is effected by means of a cellular wheel.

13. Method according to Claim 12, characterized in that the speed of rotation of the cellular wheel is controlled to achieve the desired oxygen set point as a function of the measured actual value for the oxygen concentration.

14. Method according to either one of Claims 12 or 13, characterized in that the actual value of the oxygen level is measured outside the cellular wheel in the biological treatment tank.

## Revendications

1. Procédé de purification biologique approfondie d'eaux usées, dans lequel des eaux usées ayant éventuellement fait l'objet d'un traitement mécanique préalable sont acheminées à un bassin biologique comprenant une biomasse à la fois sessile et en suspension, dans lequel les composés d'azote et de phosphore sont éliminés biologiquement dans une large mesure, et dans lequel des eaux usées purifiées ayant fait l'objet de ce traitement peuvent être extraites du bassin biologique,
caractérisé en ce que, pendant le processus dans le bassin biologique, des zones sont maintenues à différents niveaux d'oxygène par le biais d'un chargement en oxygène réglable, une zone aérobie étant formée à proximité de la surface du bassin biologique et une zone anaérobie étant formée à proximité du fond du bassin biologique, lesquelles sont éventuellement reliées entre elles par une ou plusieurs zones de transition,
et en ce qu'on utilise comme concentration de biomasse une somme de biomasse sessile et en suspension de plus de 3 kg de substance sèche par m³ de volume de bassin biologique utilisé.

2. Procédé suivant la revendication 1, caractérisé en ce qu'on utiliseune concentration de biomasse comprise entre 4 et 8 kg.

3. Procédé suivant la revendication 1 ou 2, caractérisé en ce qu'on maintient, dans la zone aérobie, une concentration en oxygène libre dissous comprise entre environ 1 et 4 mg/l.

4. Procédé suivant l'une quelconque ou plusieurs des revendications précédentes, caractérisé en ce qu'on maintient -, dans la zone anaérobie, une concentration en oxygène libre dissous inférieure à 0,5 mg/l.

5. Procédé suivant la revendication 4, caractérisé en ce que la proportion d'oxygène qui est présent sous la forme d'oxygène chimiquement lié, par exemple en tant que nitrate, tend vers zéro.

6. Procédé suivant l'une quelconque ou plusieurs des revendications précédentes, caractérisé en ce que 1/2 à 3/4, de préférence 2/3 à 3/4, du volume du bassin biologique est entretenu sous la forme d'une zone aérobie.

7. Procédé suivant l'une quelconque ou plusieurs des revendications précédentes 1 à 5, caractérisé en ce que 1/4 à 1/2, de préférence 1/4 à 1/3, du volume utilisé du bassin biologique est entretenu sous la forme d'une zone anaérobie.

8. Procédé suivant l'une quelconque ou plusieurs des revendications précédentes, caractérisé en ce qu'une concentration en oxygène augmentant depuis la zone anaérobie en direction de la zone aérobie possédant une teneur en oxygène libre dissous qui est supérieure à 0,5 mg/l et inférieure à 1 mg/l est maintenue dans la zone de transition.

9. Procédé suivant l'une quelconque ou plusieurs des revendications précédentes, caractérisé en ce que la teneur en oxygène dans la zone anaérobie est mesurée de manière continue en vue de la détermination d'une valeur effective.

10. Procédé suivant l'une quelconque ou plusieurs des revendications précédentes, caractérisé en ce que la teneur en oxygène dans la zone aérobie est mesurée de manière continue en vue de la détermination d'une valeur effective.

11. Procédé suivant l'une quelconque ou plusieurs des revendications précédentes 9 et 10, caractérisé en ce que les valeurs effectives sont réglées sur des valeurs de consigne prédéterminées au moyen d'un chargement en oxygène réglable.

12. Procédé suivant l'une quelconque ou plusieurs des revendications précédentes, caractérisé en ce que le chargement en oxygène est effectué au moyen d'une roue cellulaire.

13. Procédé suivant la revendication 12, caractérisé en ce que la vitesse de la roue cellulaire est réglée en vue d'atteindre la valeur de consigne d'oxygène souhaitée en fonction de la valeur effective mesurée pour la concentration en oxygène.

14. Procédé suivant l'une quelconque des revendications 12 ou 13, caractérisé en ce que la valeur effective de la teneur en oxygène est mesurée à l'extérieur de la roue cellulaire dans le bassin biologique.
